Europäisches Patentamt

European Patent Office

Office européen des brevets

(11) Publication number: **0 458 583 A2**

(12) # EUROPEAN PATENT APPLICATION

(21) Application number: 91304567.0

(51) Int. Cl.⁵: **H04N 9/81**

(22) Date of filing: 21.05.91

(30) Priority: 22.05.90 JP 132049/90

(43) Date of publication of application:
27.11.91 Bulletin 91/48

(84) Designated Contracting States:
DE FR GB

(71) Applicant: SONY CORPORATION
7-35 Kitashinagawa 6-Chome Shinagawa-ku
Tokyo 141 (JP)

(72) Inventor: Yamashita, Keitaro, c/o Patents Div.
Sony Corp.
6-7-35 Kitashinagawa
Shinagawa-ku, Tokyo 141 (JP)
Inventor: Saito, Takehiko c/o Patents Div.,
Sony Corporation
6-7-35 Kitashinagawa Shinagawa-ku
Tokyo 141 (JP)

(74) Representative: Thomas, Christopher Hugo et
al
D Young & Co 10 Staple Inn
London WC1V 7RD (GB)

(54) **Video signal recording apparatus.**

(57) A video tape recorder (VTR) records and reproduces a signal distributed to a plurality of channels by use of a memory (3, 6). The VTR comprises one magnetic head (71) mounted on a drum (70), the magnetic head (71) integrally incorporating a pair of magnetic gaps corresponding to different azimuths. The drum (70) is rotated n times as fast as a field frequency, n being a natural number. The time base of the signal distributed to the plurality of channels using the memory (3, 6) is changed in accordance with the rotary speed of the drum (70) and with an angle at which a magnetic tape (18) is wound around the drum (70).

# FIG. 1B

This invention relates to video signal recording apparatus.

In video tape recorders (VTRs), for example for recording and reproducing a high definition television (HDTV) signal, especially in those for household use, the chrominance signal is linearly sequenced and the time base thereof is contracted or expanded for time division multiplexing with the luminance signal. The resulting so-called TCI signal is distributed to a plurality of channels using a multichannel head device for recording and reproduction, as disclosed in Japanese laid-open patent specification 63/194494.

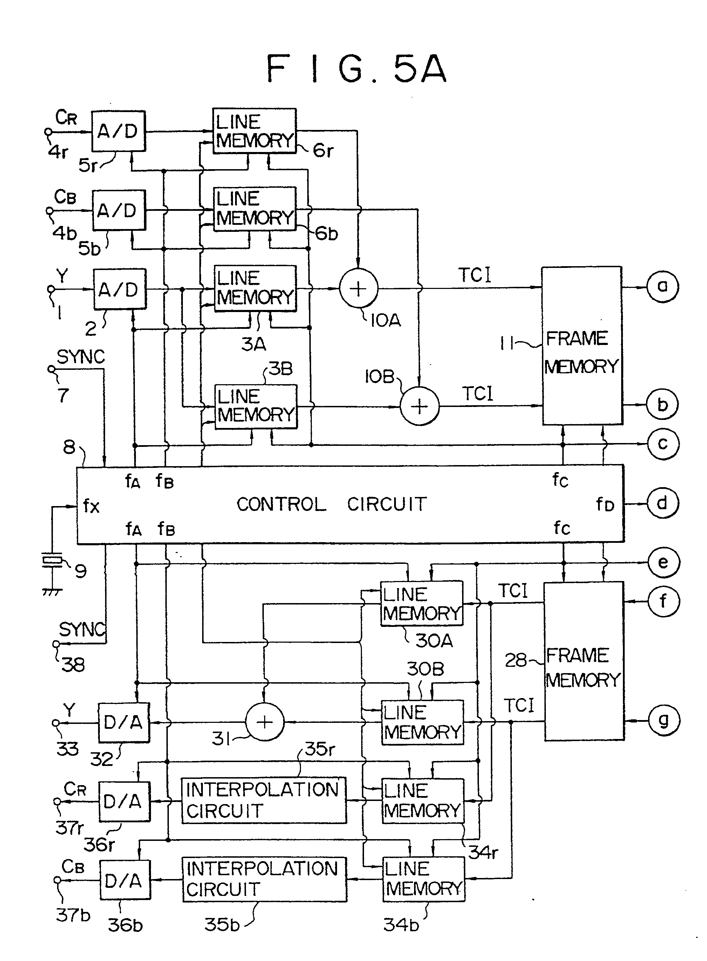

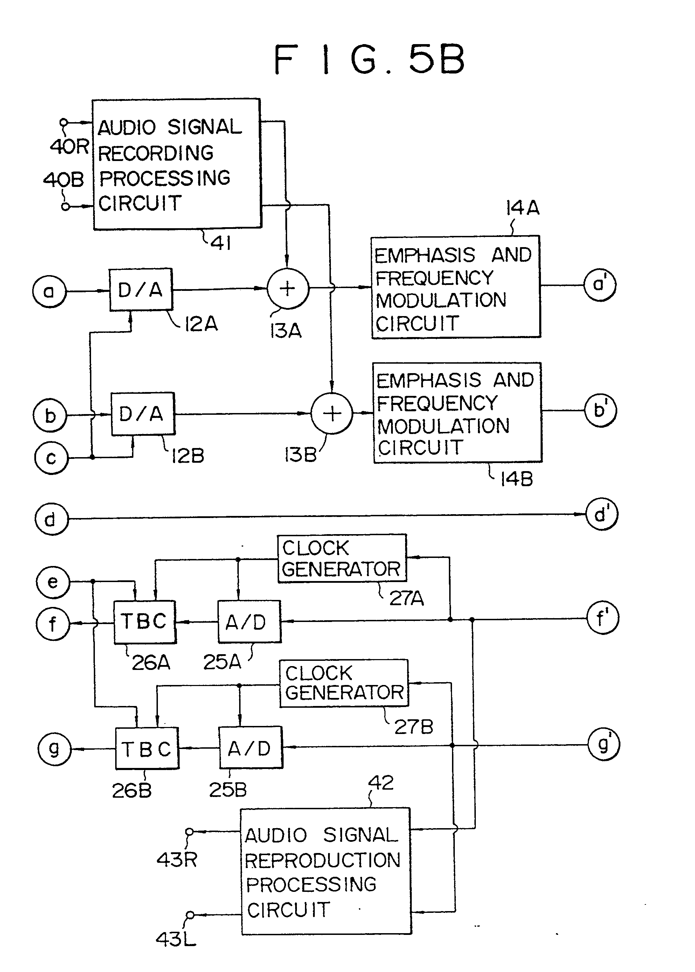

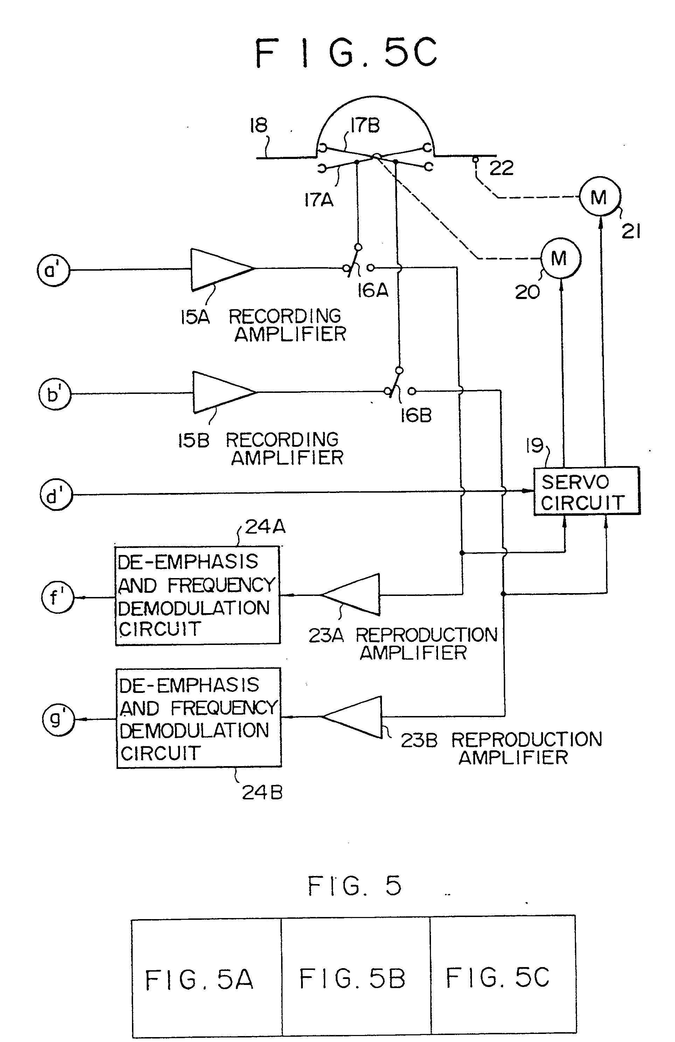

Figure 5 illustrates a previously proposed apparatus that implements the above operations. An input terminal 1 receives a luminance signal Y, demodulated from the HDTV signal, which is supplied to line memories 3A and 3B via an analogue-to-digital (A/D) converter 2. Input terminals 4r and 4b receive chrominance signals (colour difference signals R-Y: CR, B-Y: CB), demodulated from the HDTV signal, which are supplied to line memories 6r and 6b via A/D converters 5r and 5b, respectively.

An input terminal 7 receives a synchronizing signal (Sync), separated from the HDTV signal, which is passed to a control circuit 8. The control circuit 8 generates a variety of control and clock signals in accordance with a reference clock signal from a time-base generator 9, and with the above-mentioned synchronizing signal.

Thereafter, the signal from the memory 3A and the signal from the memory 6r are added by an adder 10A, and the composite signal is supplied to a frame memory 11. The signal from the memory 3B and the signal from the memory 6b are added by an adder 10B, and the composite signal is also supplied to the frame memory 11. The signals from the memory 11 are supplied to adders 13A and 13B via digital-to-analogue (A/D) converters 12A and 12B.

Input terminals 40R and 40L receive right and left-hand channel stero audio signals, which are passed to an audio signal recording processing circuit 41 for conversion to appropriate digital audio signal format. The signal from the processing circuit 41 is supplied to the adders 13A and 13B. The signals from the adders 13A and 13B are supplied to emphasis and frequency modulation circuits 14A and 14B. The emphasized and frequency-modulated signals are supplied to heads 17A and 17B on the head drum via recording amplifiers 15A and 15B, as well as via recording/reproduction changeover switches 16A and 16B, respectively. The heads 17A and 17B record the signals they have received onto a magnetic tape 18. As will be described later, the heads 17A and 17B are each formed as a magnetic gap integrated with one magnetic head device.

The control circuit 8 supplies its reference signal to a servo circuit 19, which supplies its signal to a capstan motor 21. The motor 21 drives a capstan 22 that transports the magnetic tape 18.

Reproduction by this apparatus typically takes place as follows. The signal recorded on the magnetic tape 18 is reproduced by the heads 17A and 17B. The reproduced signals are supplied to the servo circuit 19 via the switches 16A and 16B, as well as to de-emphasis and frequency demodulation circuits 24A and 24B via reproduction amplifiers 23A and 23B. In turn, the de-emphasis and frequency demodulation circuits 24A and 24B supply their signals to an audio signal reproduction processing circuit 42. The processing circuit 42 reproduces audio signals from digital audio signals contained in the reproduced signals. After reproduction by the processing circuit 42, left and right-hand channel stereo audio signals are supplied to output terminals 43L and 43R, respectively.

The circuits 24A and 24B supply their signals to time base correction (TBC) circuits 26A and 26B via A/D converters 25A and 25B, as well as to clock generators 27A and 27B. The clock signals from the clock generators 27A and 27B are sent to the A/D converters 25A and 25B as well as to the TBC circuits 26A and 26B.

The TBC circuits 26A and 26B supply their signals to a frame memory 28. The signals from the frame memory 28 are supplied to line memories 30A and 30B, and the signals from the memories 30A and 30B are added by an adder 31. The adder 31 supplies the sum via a D/A converter 32 to an output terminal 33 for the luminance signal Y.

The signals from the frame memory 28 are supplied further to line memories 34r and 34b. The signals from the memories 34r and 34b are supplied to interpolation circuits 35r and 35b, respectively, which supply their signals via D/A converters 36r and 36b to output terminals 37r and 37b for the chrominance signals CR and CB.

In addition, the control circuit 8 outputs the synchonizing signal Sync to an output terminal 38.

When this apparatus records, say, an HDTV signal, the following operations take place. The luminance signal Y and the chrominance signals (R-Y: CR, B-Y: CB) are first sampled using clock signals of frequencies fA and fB from the control circuit 8, as shown in Figures 6A, 6B and 6C. The sampled signals are converted from analogue-to-digital format before being written in the memories 3A, 3B, 6r and 6b.

The frequency fA is selected to be the simplest integral multiple of the basic clock frequency for the HDTV signal, that is, 74.25 MHz, as well as an integral multiple of the HDTV horizontal frequency ($fh1 = 33.75$ kHz). For example, the frequency is:

$fA = (3 \times 74.25)/5 = 44.55$ [MHz] $= 1320 \, fH1$

The frequency fB is selected to be one fourth of the frequency fA.

The time-base generator 9 of the frequency 44.55 MHz supplies its clock signals to the control circuit 8. That is, the clock signal of the frequency fA is directly output as supplied, while the clock signal of the frequency fB is output after division of the supplied signal by four.

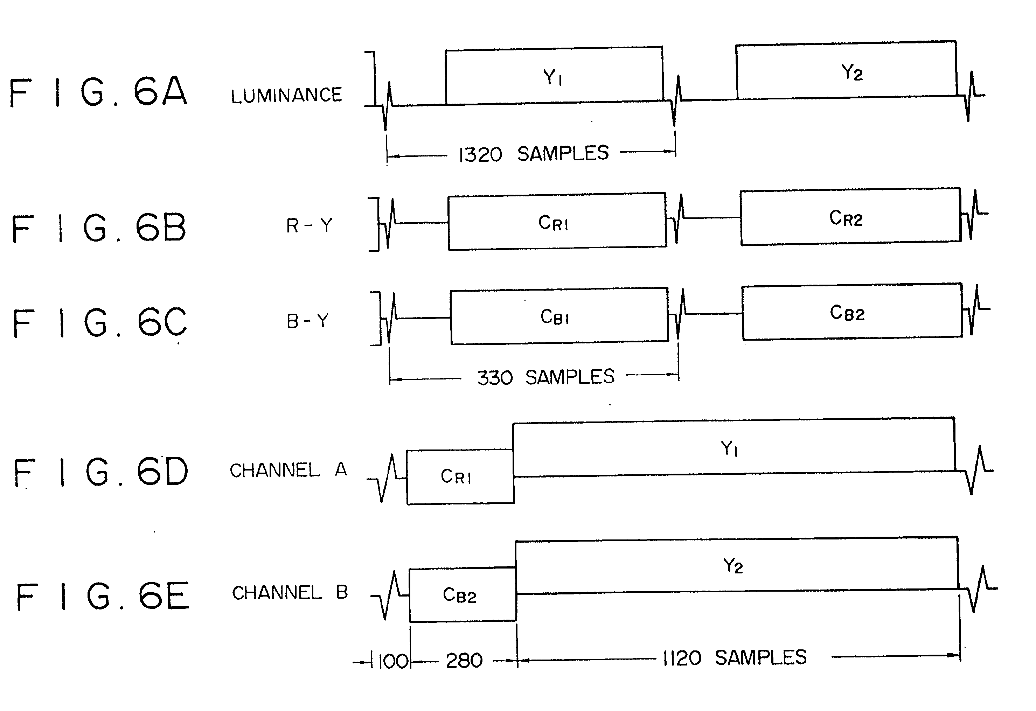

The luminance signal Y on the one hand, and the chrominance signals CR and CB on the other, are sampled 1320 and 330 times per horizontal scanning line, respectively, as illustrated in Figure 6. The sampled signals are written in the memories 3A, 3B, 6r and 6b. The writing of the signals is carried out with each horizontal synchonizing signal used as a starting signal. The memories 3A and 3B receive the signals alternately every other horizontal period.

The written signals are read out using a clock signal of a frequency fC so that the time base thereof is suitably contracted or expanded. When read out, the signals are added by the adders 10A and 10B. The result is illustratively the so-called TCI signal whose waveforms are shown in Figures 6D and 6E.

The clock frequency fC of the TCI signal, the horizontal scanning line count L per frame and the sampling count S per horizontal scanning line are selected as follows. Since the above-described apparatus performs two-channel simultaneous recording when forming the TCI signal based on the HDTV signal, the following equation needs to be met:

$$\frac{1125 \times 1320}{44.55 \times 10^6} = \frac{L \times S}{2fc}$$

where the values of L and S are determined in accordance with the characteristics of the VTR. For example, if the recording format stipulates that L = 1332 and S = 1500, then the frequency fc is:

$$fc = 29.97 \text{ [MHz]} = 888 \text{ fH1} = 37 \text{ fA}/55$$

Thus, the clock signal of the frequency fc is supplied to the memories 3A, 3B, 6r and 6b. At the same time, say 50 clock pulses after a horizontal synchonizing signal, 280 samples of the chrominance signals CR and CB are read out for the effective line period from the line memories 6r and 6b. Thereafter, 1120 samples of the luminance signal Y are read out for the effective line period, and 100 samples thereof are read out for the synchronizing period, all from the line memories 3A and 3B.

In this manner, the TCI signal is formed over two channels A and B, as depicted in Figure 6. The reading of the signal is carried out using every other horizontal synchronizing signal as a starting signal. Because the frequency fc is greater than half the frequency fA, one horizontal period of the actual TCI signal is a little shorter than twice that of the HDTV signal.

The TCI signal thus formed is written consecutively in the frame memory 11.

The signals written in the frame memory 11 are read therefrom using the clock signal of the frequency fc. That is, the signals written in the frame memory 11 are read therefrom every other horizontal period during the first scanning segment of the heads 17A and 17B relative to the magnetic tape 18, and are read in the remaining horizontal periods during the second scanning segment. After being read out, the signals are converted from digital to analogue format, emphasized and frequency-modulated, and recorded by the heads 17A and 17B onto the magnetic tape 18. At this time, the control circuit 8 supplies the reference signal of a frequency fD (= 60 Hz) to the servo circuit 19. The servo circuit 19 causes the heads 17A and 17B to rotate at the frequency of fD, and transports the magnetic tape 18 so that a predetermined track pitch requirement is met.

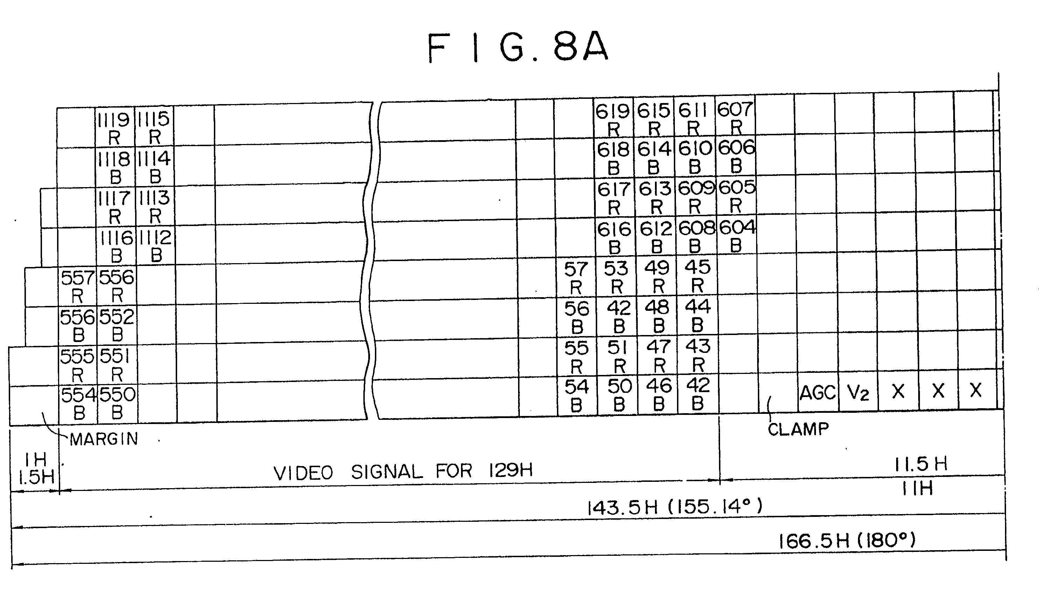

The heads 17A and 17B are each made of two heads. Mounted 180 degrees apart on a rotating drum 70, the heads 17A and 17B form the arrangement shown in Figure 7 on one side of the rotating drum 70. For example, a magnetic gap 17a of one azimuth corresponding to the head 17A and a magnetic gap 17b of the other azimuth corresponding to the head 17B have a stagger h therebetween, the stagger h being equal to a track pitch p of the track pattern formed when the magnetic tape 18 is transported at normal speed. These magnetic gaps form a single magnetic head device 71 which forms two inclined tracks at a time on the tape surface; so one turn of the rotating drum 70 forms four inclined tracks having a different azimuth each for recording.

In this manner, the video signal is recorded on the magnetic tape 18 in the recording pattern in which two turns of the rotating drum 70 convert one frame into four segments (eight tracks) on two channels for recording. At the same time, the digital audio signal is recorded in a blank space left after contraction of the time base of the video signal, as described above.

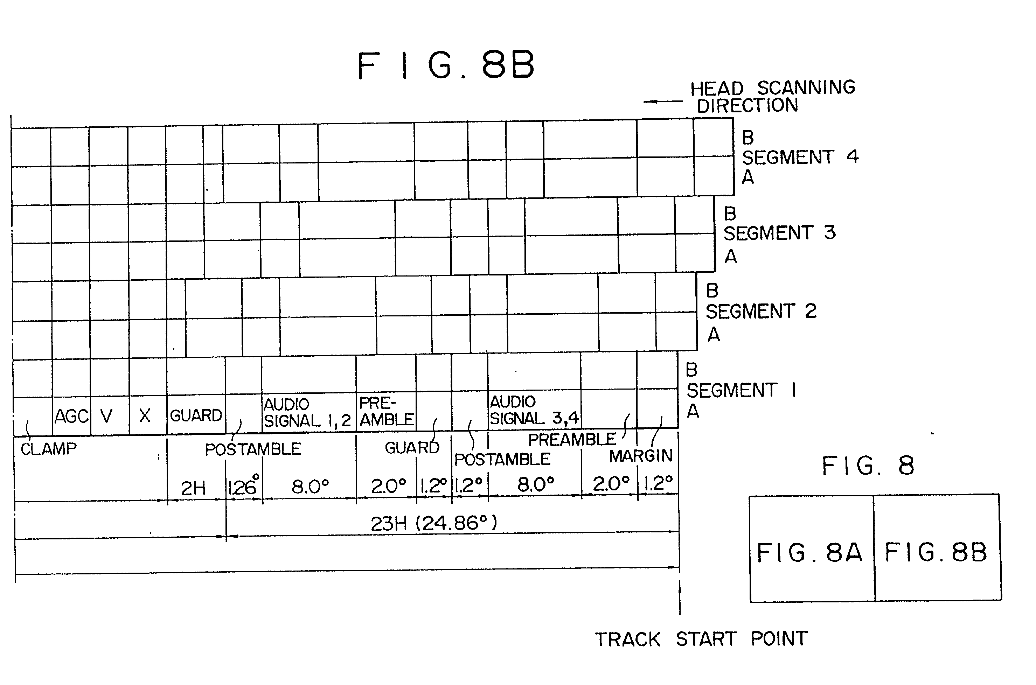

Referring to Figure 8, a digital audio signal recording range precedes the video signal recording range in the head scanning direction. Each track has a tape winding range of 180 degrees corresponding to 166.5 horizontal periods. Of these horizontal periods, 23 periods (that is, 24.86 degrees) are allocated as the audio signal recording range. In the recording range preceding the video signal recording range, about 1.2 degrees form a margin, followed by 2.0 degrees that form a preamble. The next 8.0 degrees record the digital audio signal of the third and fourth channels. The next 1.2 degrees form a postamble followed by 1.2 degrees that form a guard band between audio signals. The guard band is followed by a preamble of 2.0 degrees, which in turn is followed by 8.0 degrees that record the digital audio signal of the first and second channels. The next 1.26 degrees make up a postamble.

The audio signal recording range is followed by a recording of the audio signal of two horizontal periods and a guard band between video signals. Thereafter, vertical synchonizing signals V1 and V2 and such information signals as AGC reference level and clamp level signals are recorded in 11 or 11.5 horizontal periods. After that, TCI signals of 130 horizontal periods each are recorded as shown in Figure 8 according to the above-described signal distribution pattern. The numeral in Figure 8 correspond to horizontal period numbers, and characters R and B refer to the chrominance signals to be multiplexed. After the TCI signal recording range, a margin of 0.5 or 1 horizontal period is provided.

For reproduction, the apparatus places the heads 17A and 17B and the magnetic tape 18 under servo control such that the reference signal of the frequency fD and part of the reproduced signals from the heads 17A and 17B are supplied to the servo circuit 19 to comply with the above-described recording pattern. Given the reproduced signals, a series of operations that reverse the recording process including TBC, interpolation and others necessary for reproduction are carried out. This reproduces the luminance signal Y and the chrominance signals CR and CB.

In this wry, the HDTV signal is recorded and reproduced.

It has been contemplated that the above VTR should be made small enough to be integrated with a video camera. In such a case, to make the VTR smaller requires reducing the diameter of the rotating drum used therein.

One way to reduce the rotating drum diameter is to double the number of heads and reduce the drum diameter by one third, as adopted for 8mm and VHS-C video formats. One disadvantage of this method is the obvious increase in the head count, resulting in the need for more rotary transformers and recording and reproducing amplifiers which increases the production cost and the dispersion in electrical characteristics, and deteriorates the space factor. Furthermore, the drum diameter reduction is a mere one third.

According to the present invention there is provided a video signal recording apparatus for distributing a video signal to a plurality of channels and forming on a magnetic tape an inclined track for each of said plurality of channels, the inclined tracks being recorded with different azimuths, said apparatus comprising:
a drum rotatable at L times a field frequency, L being a natural number;
a set of n channel heads on said drum and having head gaps contiguous to one another, said head gaps each having a different azimuth, said channel heads simultaneously generating n tracks on said magnetic tape, n being a natural number of 2 or more; and
means for changing the time base of said video signal in accordance with the rotary speed of said drum, and with an angle at which said magnetic tape is wound around said drum.

According to the present invention there is also provided a video signal recording apparatus for generating a tape pattern similar to that which is generated by an apparatus wherein a video signal written in a memory with a predetermined write clock signal is read out using a read clock signal at a clock frequency f1 defining a predetermined time base, and wherein two sets of n-channel heads positioned 180 degrees apart on a drum rotating at a rotating frequency of N1 record simultaneously the read video signal onto n tracks on a magnetic tape wound around said drum at a winding angle of θ1, n being an integer of 2 or more, said video signal recording apparatus comprising:
a drum around which said magnetic tape is wound at an angle of θ2, said drum rotating at a rotating frequency of N2;
a set of two-channel heads provided on said drum and having contiguous head gaps each assigned a different azimuth, said two-channel heads simultaneously generating two tracks on said magnetic tape; and
memory means for changing the time base of said video signal, said memory means allowing data to be read therefrom using a read clock signal with a clock frequency of f2, where:

$$f2 = f1 * \frac{N2}{N1} * \frac{\theta 1}{\theta 2} .$$

According to the present invention there is also provided a video signal recording apparatus for generating a tape pattern similar to that which is generated by an apparatus wherein a video signal written in a memory with a predetermined write clock signal is read out using a read clock signal at a clock frequency f1 defining a predetermined time base, and wherein two sets of n-channel heads positioned 180 degrees apart on a drum rotating at a rotating frequency of N1 record simultaneously the read video signal onto n tracks on a magnetic tape wound around said drum at a winding angle of θ1, n being an even number of 2 or more, said video signal recording apparatus comprising:
a drum around which said magnetic tape is wound at an angle of θ2, said drum rotating at a rotating frequency of N2;
a set of n-channel heads provided on said drum and having contiguous head gaps each assigned a different azimuth, said n-channel heads simultaneously generating n tracks on said magnetic tape; and memory means for changing the time base of said video signal, said memory means allowing data to be read therefrom using a read clock signal with a clock frequency of f2 where:

$$f2 = f1 * \frac{N2}{N1} * \frac{\theta 1}{\theta 2} .$$

An embodiment of VTR according to the invention has only one magnetic head mounted on the rotating drum. The magnetic head integrally incorporates two magnetic gaps corresponding to the different azimuths. The rotating drum is rotated n times as fast as the field frequency, n being a natural number, so that inclined tracks are formed. At the same time, the time base of the signal distributed to multiple channels using the memory is changed in accordance with the rotary speed of the rotating drum and with the angle at which the magnetic tape is wound around the drum. This set-up allows the rotating drum diameter to be reduced as desired in a simplified VTR construction.

The invention will now be described by way of example with reference to the accompanying drawings, throughout which like parts are referred to by like references, and in which:

Figure 1 is a set of views showing parts of a VTR forming a first embodiment of the invention;

Figure 2 is a set of views showing parts of a second embodiment of the invention;

Figure 3 is a diagrammatic view of the second embodiment;

Figure 4 is a set of views showing parts of a third embodiment of the invention;

Figure 5 is a block diagram of a previously proposed VTR;

Figure 6 shows signal waveforms;

Figure 7 is a view showing parts of the VTR of Figure 5; and

Figure 8 is a diagrammatic view of a recording pattern.

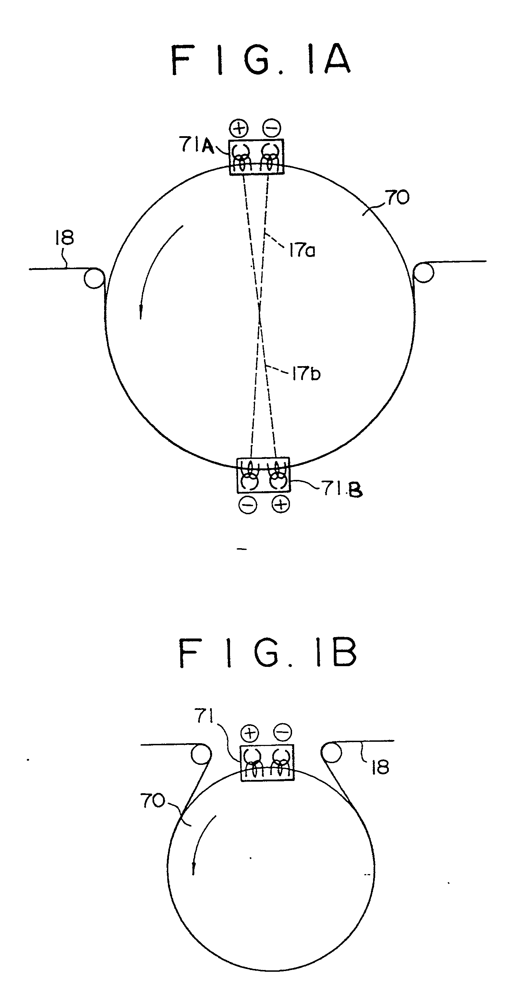

In the above-described apparatus, the rotating drum 70 is constructed as shown in Figure 1A, where the heads 17A and 17B each comprise two magnetic head devices 71A and 71B. The two head devices are located 180 degrees apart on the rotating drum 70.

By contrast, in a first embodiment of the invention, the rotating drum is constructed as shown in Figure 1B. That is, only one magnetic head device 71 is mounted on the rotating drum 70, with the diameter of the drum 70 reduced as desired. In this set-up, the control circuit 8 supplies a reference signal of the frequency fD (= 120 Hz) to the servo circuit 19, so that the rotating drum 70 rotates at the frequency of 120 Hz, that is, double the previously proposed frequency. With the rotating drum 70 in motion, the magnetic tape 18 is transported so as to meet a predetermined track pitch requirement.

With the first embodiment, four turns of the rotating drum 70 record the single-frame signal mentioned above in a recording pattern of four segments (8 tracks) on two channels.

D1 stands for the drum diameter of the device in Figure 1A and N1 for the rotary speed thereof, and D2 denotes the drum diameter of the device in Figure 1B and N2 the rotary speed thereof. In that case, the angles $\theta 1$ and $\theta 2$ at which the magnetic tape 18 is wound around the rotating drum 70 fulfil the relationship:

$$\pi D1 \frac{\theta 1}{360°} = \pi D2 \frac{\theta 2}{360°}$$

$$\therefore D1 \theta 1 = D2 \theta 2$$

Thus the tape winding angles $\theta 1$ and $\theta 2$ and the rotary speeds N1 and N2 allow the signal compaction rate upon recording to be calculated. Given these factors, the clock frequencies fc (fc1, fc2) of the TCI signal comply with the relation:

$$\frac{fc2}{fc1} = \frac{\frac{1}{N1} \frac{\theta 1}{360°}}{\frac{1}{N2} \frac{\theta 2}{360°}}$$

$$\therefore fc2 = fc1 \times \frac{N2}{N1} \frac{\theta 1}{\theta 2}$$

If N2 = 2N2, then:

$$fc2 = \frac{2\theta 1}{\theta 2} fc1$$

When the above-mentioned TCI signal is formed using the clock signal of the frequency of fc2, the same signal recording as before may be carried out by a rotating drum 70 of a reduced diameter.

In this manner, signals such as an HDTV signal are recorded. The first embodiment has only one magnetic head device 71 mounted on the rotating drum 70, the head device 71 integrally incorporating a pair of magnetic gaps corresponding to different azimuths. The rotating drum 70 is rotated n times as fast as the field frequency, n being a natural number, so that inclined tracks are formed. At the same time, the time base of the signal distributed to multiple channels using memory is changed in accordance with the rotary speed of the rotating drum 70 and with the angle at which the magnetic tape 18 is wound around the rotating drum 70. This set-up implements a smaller rotating drum diameter in a simplified hardware construction.

Because the number of magnetic heads is not increased, there is neither appreciable rise in production cost nor increases in the dispersion of electrical characteristics, and no deterioration of space factor with the first embodiment.

The described set-up of the first embodiment is used to change the time base of the video signal as needed by varying the frequency fc of the clock signal used in generating the TCI signal. This makes it possible to implement the VTR in a very simple structure. Of course, the rotating drum of the reduced diameter also reproduces the recorded signal.

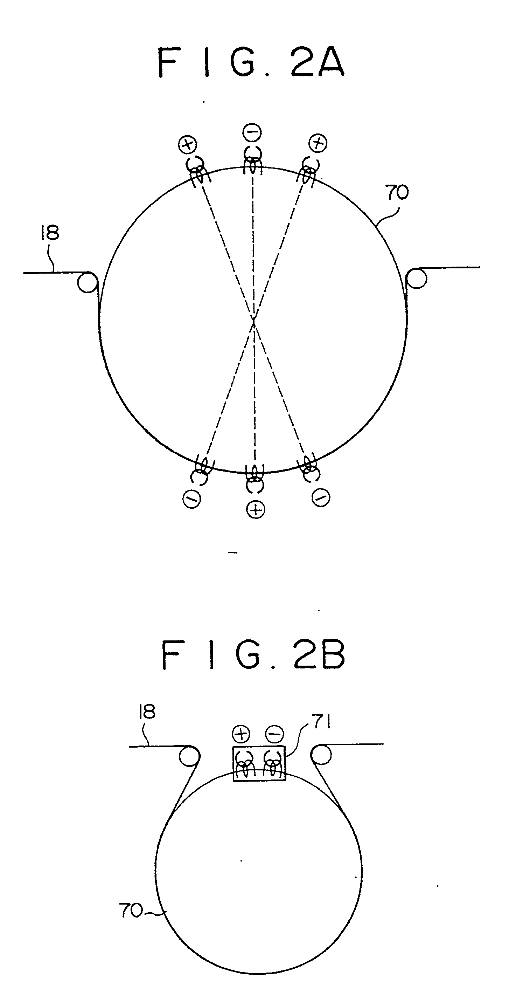

Figure 2 shows the second embodiment, which records signals on three channels simultaneously. The previously proposed apparatus typically comprises, as shown in Figure 2A, a plurality of heads with positive or negative azimuths. By contrast, the second embodiment containing the rotating drum 70 of the reduced diameter has only one magnetic head device 71 of two channels mounted on the rotating drum 70, as shown in Figure 2B. When the diameter of the rotating drum 70 is, for example, reduced by half, the rotary speed of the rotating drum 70 is tripled.

Thus the second embodiment also records and reproduces signals in the manner described above.

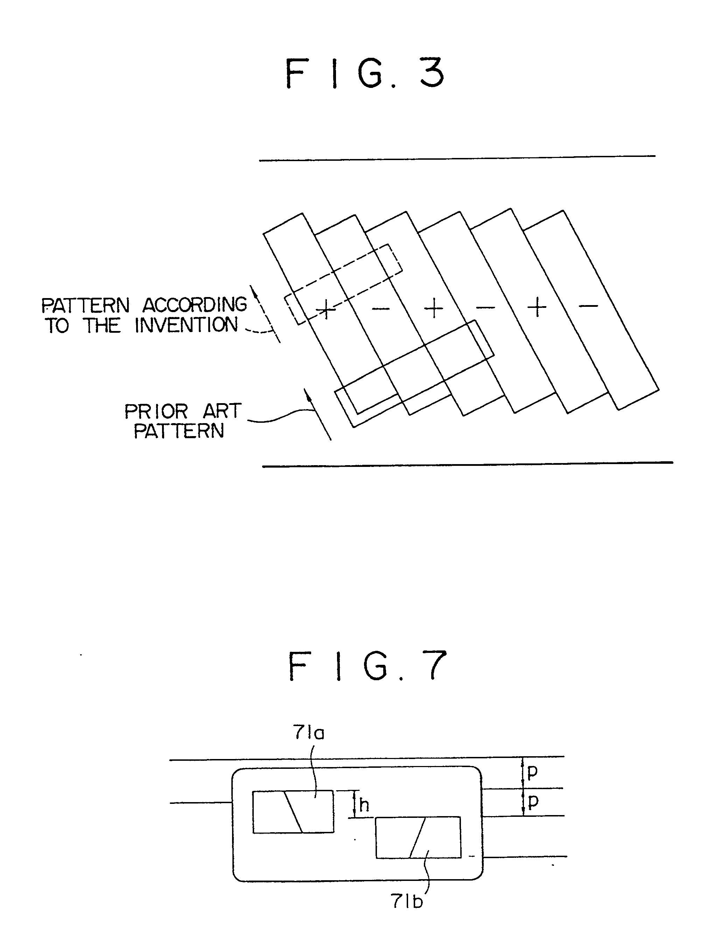

While the previously proposed apparatus forms three tracks at a time, the second embodiment forms two tracks at a time. However, the tripled rotary speed of the rotating drum 70 provide the same recording pattern as with the previously proposed apparatus, as shown in Figure 3.

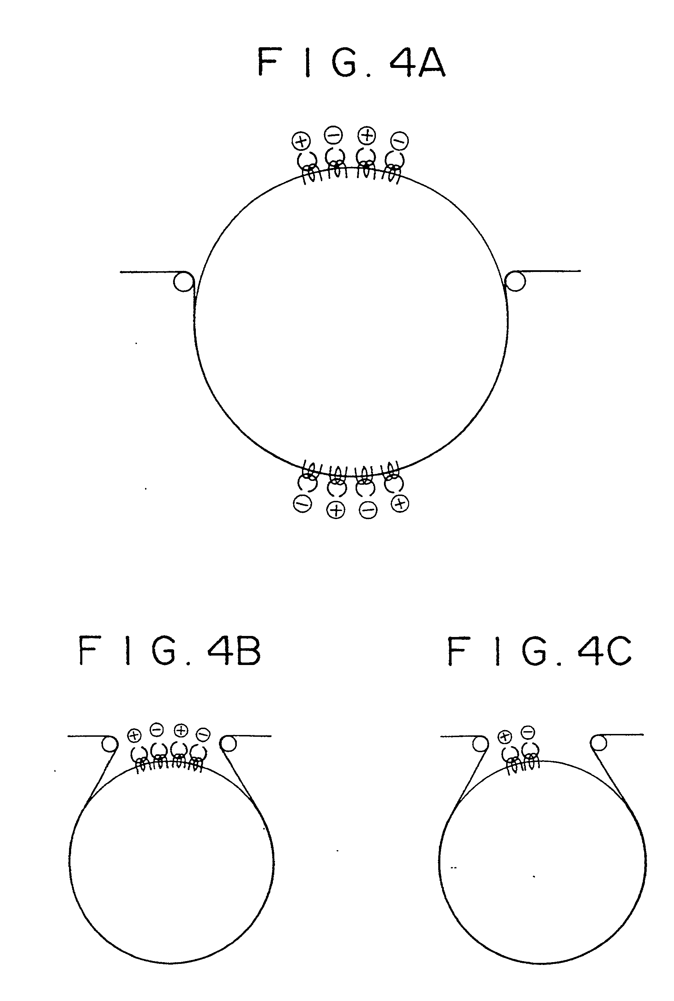

Figure 4 shows the third embodiment, which records signals on four channels simultaneously. The previously proposed apparatus typically comprises, as shown in Figure 4A, a plurality of heads with positive or negative azimuths. By contrast, the third embodiment either has one magnetic head device of four channels mounted on the rotating drum 70 as shown in Figure 4B, or has one magnetic head device of two channels on the drum as shown in Figure 4C.

Thus with the third embodiment, signals are also recorded and reproduced in the same manner as with the previously proposed apparatus by doubling or tripling the rotary speed of the rotating drum 70.

Thus embodiments of the invention provide a VTR comprising one magnetic head mounted on a rotating drum; the magnetic head integrally incorporating a pair of magnetic gaps corresponding to different azimuths; the rotating drum being rotated n times as fast as a field frequency, n being a natural number; wherein the time base of the video signal distributed to a plurality of channels using memory is changed in accordance with the rotating speed of the rotating drum and with an angle at which a magnetic tape is wound around the rotating drum. This set-up allows the rotating drum diameter to be reduced as desired in a simplified hardware construction.

Although the above description has primarily concerned embodiments of VTR for use with an HDTV signal, the invention may also be applied to devices that record and reproduce ordinary video signals by distributing them to a plurality of channels using a memory arrangement. Furthermore, the memory-based control scheme may be applied to charge coupled devices (CCDs) for imaging purposes.

**Claims**

1. A video signal recording apparatus for distributing a video signal to a plurality of channels and forming on a magnetic tape (18) an inclined track for each of said plurality of channels, the inclined tracks being recorded with different azimuths, said apparatus comprising:

   a drum (70) rotatable at L times a field frequency, L being a natural number;

   a set of n channel heads (71) on said drum (70) and having head gaps contiguous to one another, said head gaps each having a different azimuth, said channel heads (71) simultaneously generating n tracks on said magnetic tape (18), n being a natural number of 2 or more; and means for changing the time base of said video signal in accordance with the rotary speed of said drum (70), and with an angle at which said magnetic tape (18) is wound around said drum (70).

2. A video signal recording apparatus for generating a tape pattern similar to that which is generated by an apparatus wherein a video signal written in a memory with a predetermined write clock signal is read out using a read clock signal at a clock frequency f1 defining a predetermined time base, and wherein two sets of n-channel heads positioned 180 degrees apart on a drum rotating at a rotating frequency of N1 record simultaneously the read video signal onto n tracks on a magnetic tape (18) wound around said drum at a winding angle of θ1, n being an integer of 2 or more, said video signal recording apparatus comprising:

   a drum (70) around which said magnetic tape (18) is wound at an angle of θ2, said drum (70) rotating at a rotating frequency of N2;

   a set of two-channel heads (71) provided on said drum (70) and having contiguous head gaps each assigned a different azimuth, said two-channel heads (71) simultaneously generating two tracks on said magnetic tape (18); and

   memory means (3, 6) for changing the time base of said video signal, said memory means (3, 6) allowing data to be read therefrom using a read clock signal with a clock frequency of f2, where:

$$f2 = f1 * \frac{N2}{N1} * \frac{\theta1}{\theta2}.$$

3. A video signal recording apparatus for generating a tape pattern similar to that which is generated by an apparatus wherein a video signal written in a memory with a predetermined write clock signal is read out using a read clock signal at a clock frequency f1 defining a predetermined time base, and wherein two sets of n-channel heads positioned 180 degrees apart on a drum rotating at a rotating frequency of N1 record simultaneously the read video signal onto n tracks on a magnetic tape (18) wound around said drum at a winding angle of θ1, n being an even number of 2 or more, said video signal recording apparatus comprising:

   a drum (70) around which said magnetic tape (18) is wound at an angle of θ2, said drum (70) rotating at a rotating frequency of N2;

   a set of n-channel heads (71) provided on said drum (70) and having contiguous head gaps each assigned a different azimuth, said n-channel heads (71) simultaneously generating n tracks on said magnetic tape (18); and

   memory means (3, 6) for changing the time base of said video signal, said memory means (3, 6) allowing data to be read therefrom using a read clock signal with a clock frequency of f2 where:

$$f2 = f1 * \frac{N2}{N1} * \frac{\theta 1}{\theta 2}.$$

# F I G. IA

# F I G. IB

# F I G. 2A

# F I G. 2B

# F I G. 3

PATTERN ACCORDING
TO THE INVENTION

$+$ $-$ $+$ $-$ $+$ $-$

PRIOR ART
PATTERN

# F I G. 7

71a

h

p

p

71b

# F I G. 4A

# F I G. 4B

# F I G. 4C

# F I G. 5A

# F I G. 5B

# F I G. 5C

- 18
- 17B
- 17A
- 22
- M 21
- M 20
- a'
- 15A RECORDING AMPLIFIER
- 16A
- b'
- 15B RECORDING AMPLIFIER
- 16B
- d'
- 19 SERVO CIRCUIT
- 24A
- DE-EMPHASIS AND FREQUENCY DEMODULATION CIRCUIT
- f'
- 23A REPRODUCTION AMPLIFIER
- DE-EMPHASIS AND FREQUENCY DEMODULATION CIRCUIT
- g'
- 23B REPRODUCTION AMPLIFIER
- 24B

# FIG. 5

| FIG. 5A | FIG. 5B | FIG. 5C |
|---------|---------|---------|

14

FIG. 6A  LUMINANCE

Y₁    Y₂

1320 SAMPLES

FIG. 6B  R-Y

$C_{R1}$    $C_{R2}$

FIG. 6C  B-Y

$C_{B1}$    $C_{B2}$

330 SAMPLES

FIG. 6D  CHANNEL A

$C_{R1}$    Y₁

FIG. 6E  CHANNEL B

$C_{B2}$    Y₂

100  280  1120 SAMPLES

EP 0 458 583 A2

F I G. 8A

EP 0 458 583 A2

# F I G. 8B

HEAD SCANNING
DIRECTION

B
SEGMENT 4
A

B
SEGMENT 3
A

B
SEGMENT 2
A

B
SEGMENT 1
A

| AGC | V | X | GUARD | | AUDIO SIGNAL 1, 2 | PRE-AMBLE | | | AUDIO SIGNAL 3,4 | | |
|---|---|---|---|---|---|---|---|---|---|---|---|

CLAMP       POSTAMBLE     GUARD     PREAMBLE

POSTAMBLE       MARGIN

2H   126°    8.0°    2.0°   1.2°  1.2°    8.0°    2.0°   1.2°

23H (24.86°)

TRACK START POINT

## F I G. 8

| FIG. 8A | FIG. 8B |
|---|---|

EP 0 458 583 A2